# EUROPÄISCHE PATENTANMELDUNG

(11) **EP 0 950 700 A1**
(43) Veröffentlichungstag der Anmeldung: **20.10.1999**
(21) Anmeldenummer: 99106979.0
(22) Anmeldetag: 09.04.1999
(51) Int. Cl.: C09K 3/18, B64F 5/00

(54) **Vereisungsschutzmittel für Flugzeuge**

(30) Priorität: 16.04.1998 DE 19816796
(71) Anmelder: Clariant GmbH, 65929 Frankfurt am Main (DE)
(72) Erfinder: Martini, Thomas, Dr., 65779 Kelkheim (DE); Pöllmann, Klaus, Dr., 84489 Burghausen (DE)

(57) **Zusammenfassung**

Gegenstand der Erfindung ist die Verwendung von optischen Aufhellern in Flugzeugenteisungsmitteln zur Verbesserung des Nachweises der Anwendung von Enteisungsmitteln unter schlechten Sichtbedingungen und bei Nacht auf der Oberfläche von Flugzeugen. Ein weiterer Gegenstand der Erfindung ist ein Vereisungsschutzmittel für Flugzeuge, enthaltend Wasser, ein oder mehrere Glykole, einen oder mehrere Korrosionsinhibitoren, ein oder mehrere Tenside, ein oder mehrere pH-Wert-Regulatoren und ein oder mehrere Farbstoffe, dadurch gekennzeichnet, daß das Mittel zusätzlich einen optischen Aufheller enthält, der ultraviolettes Licht absorbiert und eine Fluoreszenz im sichtbaren Spektralbereich aufweist. Ein weiterer Gegenstand der Erfindung ist ein Verfahren zum Enteisen von Flugzeugen durch Aufbringen eines Vereisungsschutzmittels, dadurch gekennzeichnet, daß das Vereisungsschutzmittel einen optischen Aufheller enthält, und daß die vollständige Benetzung des Flugzeuges durch Bestrahlen mit ultraviolettem Licht und Beobachtung der Fluoreszenz festgestellt wird.

## Beschreibung

Die vorliegende Erfindung betrifft ein Vereisungsschutzmittel für Flugzeuge und die Verwendung von fluoreszierenden Farbstoffen oder optischen Aufhellern in Vereisungsschutzmitteln für Flugzeuge.

Enteisungs- und Vereisungsschutzmittel für Flugzeuge (im folgenden Enteisungsmittel oder Enteisungsflüssigkeiten genannt) werden zur Entfernung von Eis, Schnee und/oder Reif von Flugzeugoberflächen und zur Vermeidung derartiger Ablagerungen auf diesen Flächen eingesetzt. Unter winterlichen Wetterbedingungen ist die vollständige Enteisung von Flugzeugen vor dem Start mit Enteisungsmitteln und ein vollständiger Schutz der Oberfläche gegen Wiedervereisung von entscheidender Bedeutung um einen reibungslosen und sicheren Ablauf des Flugverkehrs sicherzustellen.

Die internationalen Normen ISO 11075/11078 und AMS 1424A/1428B unterscheiden zwischen sogenannten Type I, Type II und Type IV Flüssigkeiten. Type I Flüssigkeiten bestehen im wesentlichen aus Glykol, Wasser, Korrosionsinhibitoren, Tensiden, pH-Wert Regulatoren und gegebenenfalls einem Farbstoff zur besseren Erkennbarkeit auf der Flugzeugoberfläche. Type II und Type IV Flüssigkeiten enthalten zusätzlich dazu ein wasserlösliches Polymer als Verdickungsmittel zur Erreichung einer hochviskosen pseudoplastischen Konsistenz, die einen langen Schutz gegen Wiedervereisung (Hold-Over-Time) auf der Flugzeugoberfläche gewährleistet.

Eine Zusammensetzung von Flugzeugenteisungsmittel wird zum Beispiel in DE-A-24 23 893 sowie in EP-B-0 050 700, US-4 358 389, EP-B-0 231 869 und EP-B-0 360 183 beschrieben. Sie besteht im wesentlichen aus:
a) 35 bis 95 Gew.-% von mindestens einem Glykol aus der Gruppe der Alkylenglykole mit 2 bis 3 C-Atomen und Oxalkylenglykolen mit 4 bis 6 C-Atomen
b) 0,02 bis 1,5 Gew.-% von mindestens einem Tensid aus der Gruppe der anionischen und nichtionischen Tenside
c) mindestens einem Korrosionsinhibitor in einer wirksamen Menge
d) mindestens einer basischen Verbindung aus der Gruppe der Alkalimetallcarbonate, Alkalimetallhydroxide und Amine zur Einstellung eines pH-Werts von 7 bis 11
e) gegebenenfalls (im Fall von Type II und Type IV Enteisungsmitteln) 0,05 bis 3 % von mindestens einem wasserlöslichen Polymer als Verdickungsmittel
f) Wasser als Restmenge auf 100 Gew.-% bezogen auf das fertige Enteisungsmittel.

Enteisungsmittel werden üblicherweise durch Besprühen des Flugzeugs aus einem Tankfahrzeug von einer Hebebühne herab auf die Flugzeugoberfläche aufgebracht.

Wie in der Vorschrift ARP 4737 der amerikanischen Federal Aviation Administration (FAA) dargelegt, ist für einen sicheren Start die vollständige Entfernung jeglichen Eises und Schnees von der Flugzeugoberfläche und die vollständige Bedeckung mit Enteisungsflüssigkeit von entscheidender Bedeutung. Um den Nachweis einer vollständigen Bedeckung der Oberfläche mit Enteisungsmitteln zu erleichtern werden die Enteisungsflüssigkeiten seit einiger Zeit mit handelsüblichen Farbstoffen eingefärbt. So schreibt AMS 1428 B für Type IV Flüssigkeiten eine grüne Färbung vor. Unter den üblicherweise schlechten Lichtverhältnissen, die bei der Anwendung von Enteisungsmitteln herrschen und natürlich bei Nacht stellen diese Farbstoffe nur einen begrenzten Sicherheitsvorteil dar.

Die dieser Erfindung zugrunde liegende Aufgabe bestand somit darin, Farbstoffe zu finden, die zur Verwendung in Enteisungsflüssigkeiten geeignet sind, und die auch unter schlechten Lichtverhältnissen einen Nachweis der Aufbringung der Enteisungsflüssigkeit erlauben.

Überraschenderweise wurde gefunden daß optische Aufheller eine Lösung dieser Aufgabe darstellen.

Gegenstand der Erfindung ist somit die Verwendung von optischen Aufhellern in Flugzeugenteisungsmitteln zur Verbesserung des Nachweises der Anwendung von Enteisungsmitteln unter schlechten Sichtbedingungen und bei Nacht auf der Oberfläche von Flugzeugen.

Ein weiterer Gegenstand der Erfindung ist ein Vereisungsschutzmittel für Flugzeuge, enthaltend Wasser, ein oder mehrere Glykole, einen oder mehrere Korrosionsinhibitoren, ein oder mehrere Tenside, ein oder mehrere pH-Wert-Regulatoren und ein oder mehrere Farbstoffe, dadurch gekennzeichnet, daß das Mittel zusätzlich einen optischen Aufheller enthält, der ultraviolettes Licht absorbiert und eine Fluoreszenz im sichtbaren Spektralbereich aufweist.

Ein weiterer Gegenstand der Erfindung ist ein Verfahren zum Enteisen von Flugzeugen durch Aufbringen eines Vereisungsschutzmittels, dadurch gekennzeichnet, daß das Vereisungsschutzmittel einen optischen Aufheller enthält, und daß die vollständige Benetzung des Flugzeuges durch Bestrahlen mit ultraviolettem Licht und Beobachtung der Fluoreszenz festgestellt wird.

In einer bevorzugten Ausführungsform der Erfindung enthält das Vereisungsschutzmittel 0,05 bis 3 Gew.-%, bezogen auf das Vereisungsschutzmittel, eines wasserlöslichen Polymers als Verdickungsmittel.

Optische Aufheller können allgemein als Substanzen bezeichnet werden, die im ultravioletten Wellenlängenbereich Licht absorbieren und die absorbierte elektromagnetische Strahlung teilweise im Wellenlängenbereich des sichtbaren Lichts wieder emittieren. Bevorzugte ultraviolette Wellenlängen liegen zwischen 350 und 380 nm. Typische Verbindungen für diese Anwendung sind anionischer, kationischer oder nichtionischer Natur.

Im folgenden werden Beispiele geeigneter anionischer optischer Aufheller dargestellt. 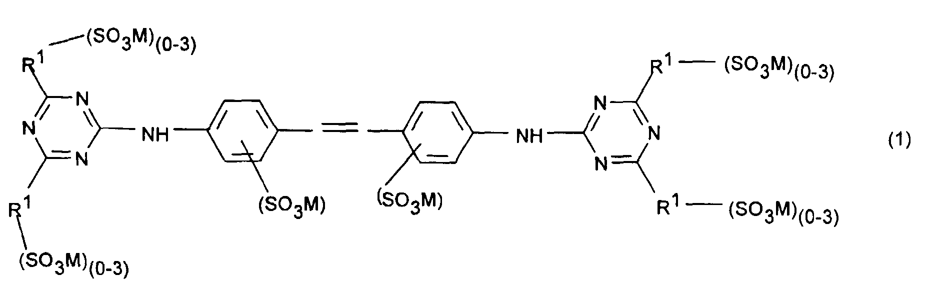 worin R¹ jeweils unabhängig für OH, NH₂, O-(C₁-C₄)-Alkyl, O-Aryl, NH-(C₁-C₄)-Alkyl, N-((C₁-C₄)-Alkyl)₂, N-((C₁-C₄)-Alkyl)-((C₁-C₄)-Hydroxyalkyl), N-((C₁-C₄)-Hydroxyalkyl)₂, NH-Aryl, Morpholino, S-(C₁-C₄)-Alkylaryl oder Cl und M für Na⁺, K⁺, NH₄⁺ oder NH₍₄₋ₐ₎Rₐ steht, worin a = 1, 2 oder 3 und R = C₁-C₄-Hydroxyalkyl, insbesondere C₂-Hydroxyalkyl ist, wobei die stöchiometrischen Indizes der Sulfonatgruppen von der Art des Restes R¹ abhängig sind, nämlich davon, wie viele solcher Gruppen dieser Rest tragen kann; 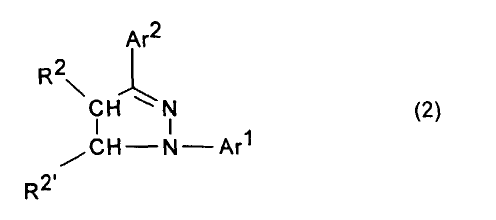 worin Ar¹ und Ar² unabhängig voneinander substituierte oder unsubstituierte Arylreste und R² und R²', die gleich oder verschieden sein können, Wasserstoff, (C₁-C₄)-Alkyl oder Phenyl bedeuten; 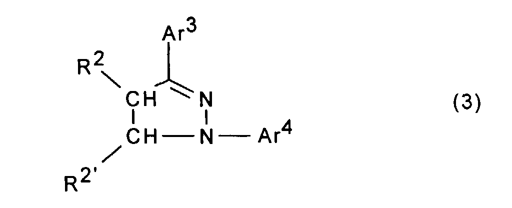 worin Ar³ und Ar⁴ unabhängig voneinander Phenyl-, Diphenyl- oder Naphthylreste bedeuten, die weitere Substituenten wie Hydroxy, (C₁-C₆)-Alkyl-, (C₁-C₆)-Alkoxy, Halogen, Hydroxyalkyl-, Amino-, Alkylamino-, Acylamino-, Carboxyl-, Alkoxycarbonyl-, Sulfonsäure-, Sulfonsäureester-, Alkylsulfonyl-, Arylsulfonyl-, Sulfonyl- und Sulfonamidgruppen tragen können; 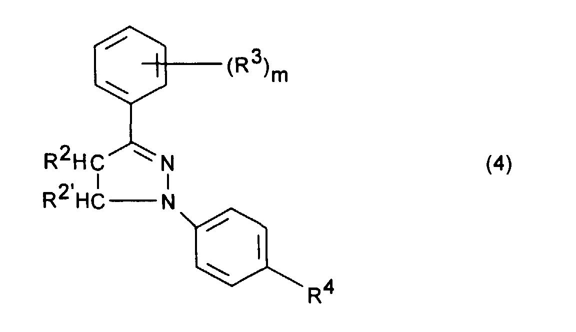 worin R³ Halogen oder (C₁-C₆)-Alkyl, R⁴ eine substituierte oder unsubstituierte (C₁-C₆)-Alkoxycarbonyl-, (C₁-C₆)-Alkylsulfonyl-, Sulfonamid- oder Sulfonsäure-Gruppe, m null, 1, 2 oder 3 bedeuten; 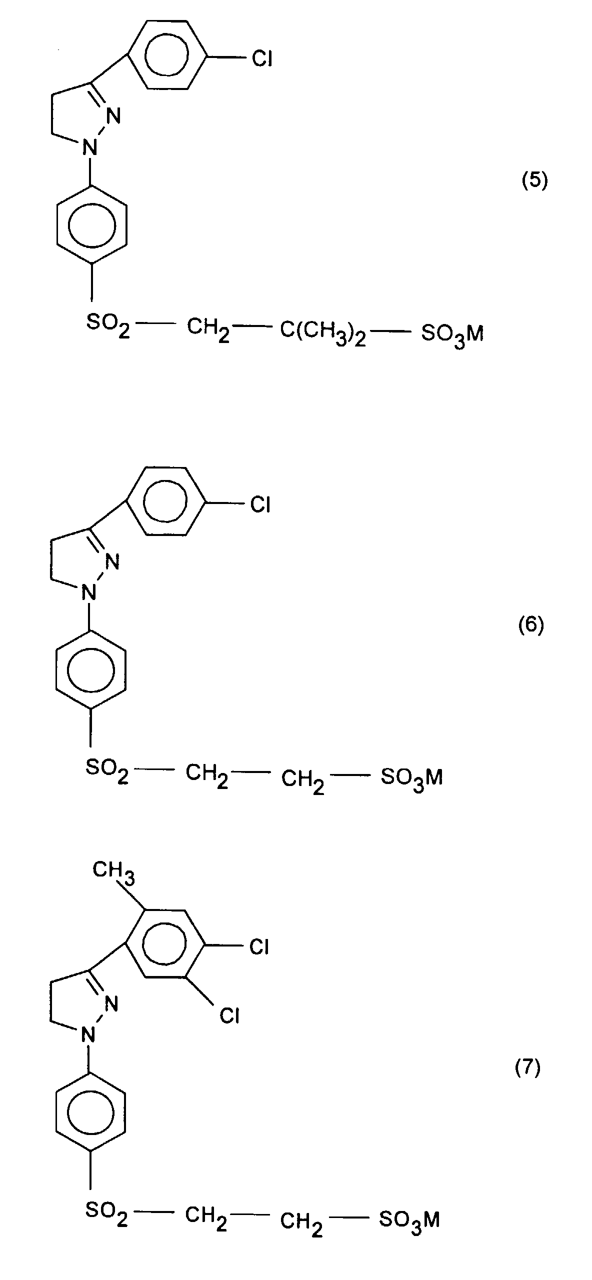 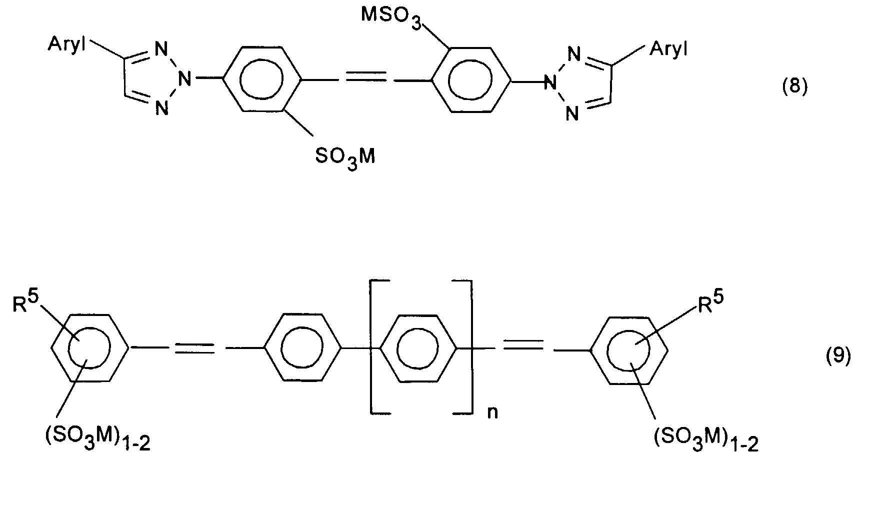 mit R⁵ = H, Alkyl, Oxalkyl, Halogen, CN, COO-(C₁-C₄)-Alkyl oder CO-N[(C₁-C₄)-Alkyl]₂ und n = 0, 1; 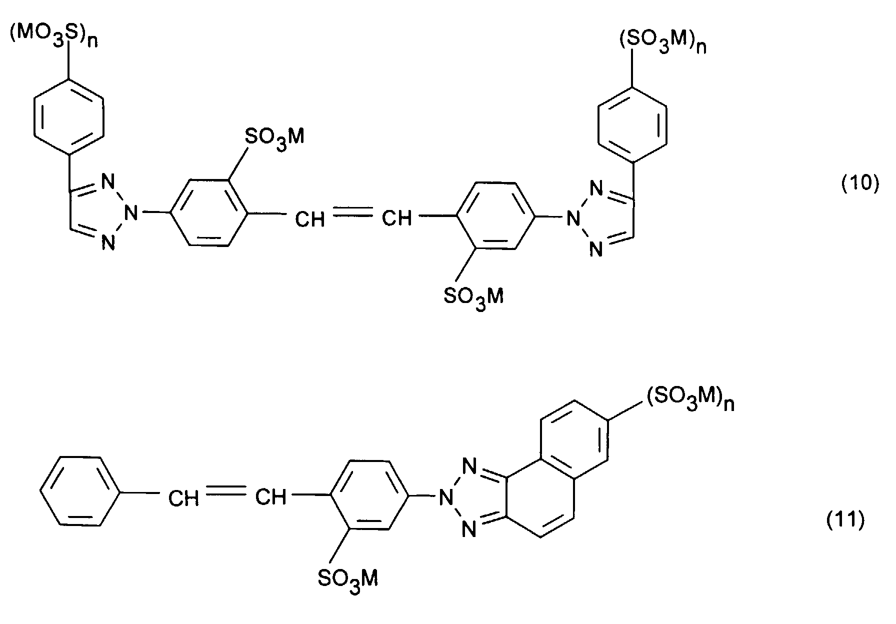 worin n 0 oder 1 bedeutet,

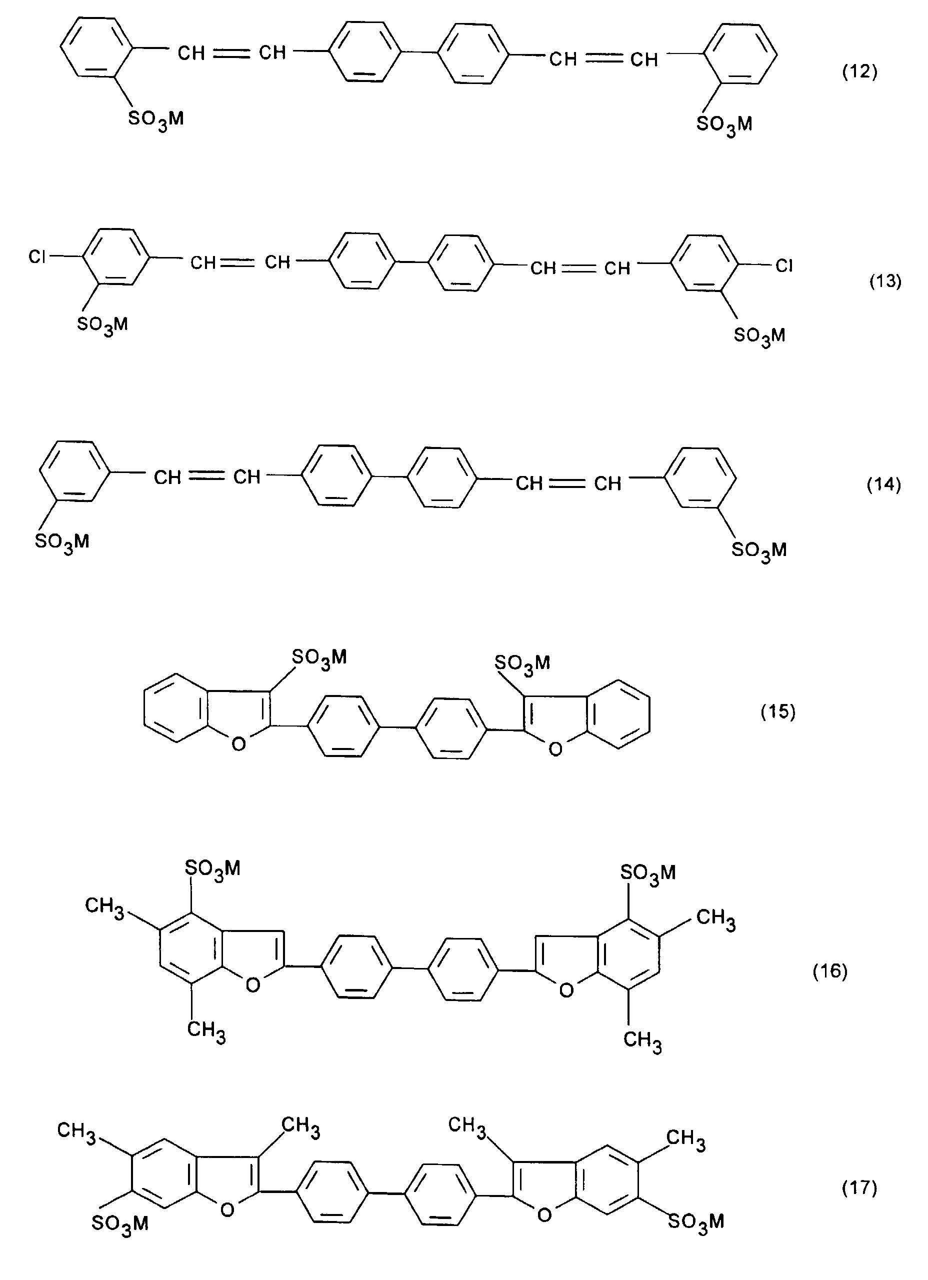

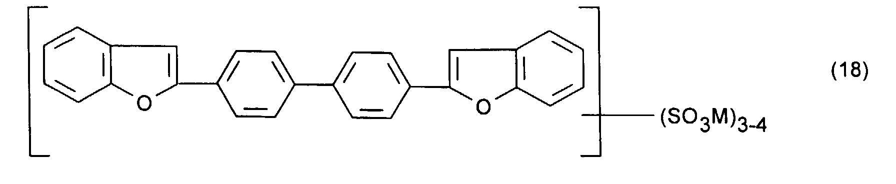

Bei den optischen Aufhellern kationischer Natur handelt es sich vorzugsweise um Verbindungen mit Pyrazolingrundstruktur, welche in der Salzform vorliegen, also Säure-Additionssalze sind. Als Säuren kommen hierfür solche, die farblose Anionen haben in Frage, wie z.B. C₁-C₃-Alkanoate, C₁-C₄-Alkanphosphate, C₁-C₄-Alkan-sulfonate, C₂-C₃-Hydroxyalkanoate, Phosphit, Sulfamiat, Halogenide, Methosulfat, p-Toluolsulfonat, vorzugsweise solche die gute Wasserlöslichkeiten aufweisen, z.B. 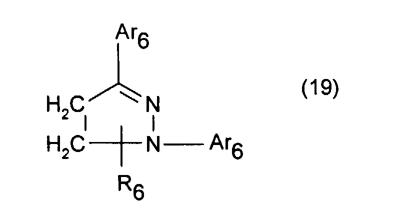 worin Ar₅ und Ar₆ unabhängig voneinander substituierte oder unsubstituierte Arylreste und R⁶ Wasserstoff, C₁-C₄-Alkyl oder Phenyl bedeuten.

Von besonderem Interesse sind Verbindungen der Formel 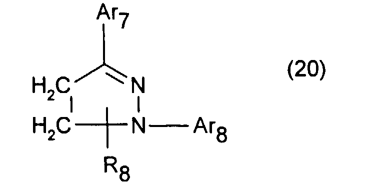 worin Ar₇ und Ar₈ unabhängig voneinander Phenyl-, Diphenyl- oder Naphthylreste bedeuten, die weitere Substituenten wie Hydroxy, C₁-C₆-Alkyl-, C₁-C₆-Alkoxy, Halogen, Hydroxyalkyl-, Amino-, Alkylamino-, Acylamino-, Carboxyl-, Alkoxycarbonyl-, Sulfonsäure-, Sulfonsäureester-, Alkylsulfonyl-, Arylsulfonyl-, Sulfonyl- und Sulfonamidgruppen tragen können und R⁶ die obige Bedeutung hat.

Besonders bevorzugt sind Verbindungen der Formel 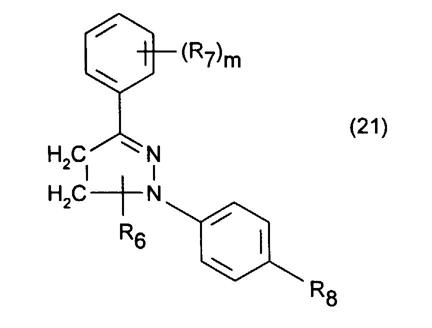 worin R⁷ Wasserstoff, Halogen oder C₁-C₆-Alkyl, R⁸ eine substituierte oder unsubstituierte C₁-C₆-Alkoxycarbonyl-, C₁-C₆-Alkylsulfonyl-, Sulfonamid- oder Sulfonsäure-Gruppe, m Null, 1, 2 oder 3 bedeuten und R⁶ die obige Bedeutung hat.

Ebenfalls besonders bevorzugt sind Verbindungen der Formel 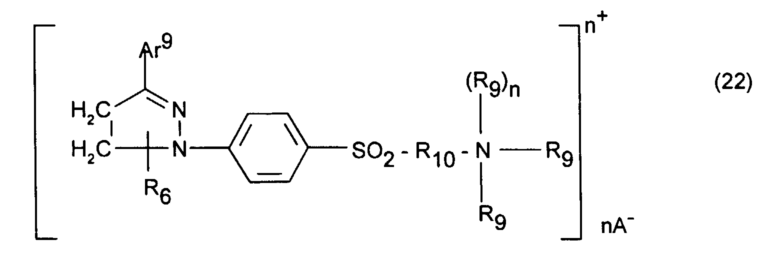 worin Ar⁹ eine Gruppe der Formeln 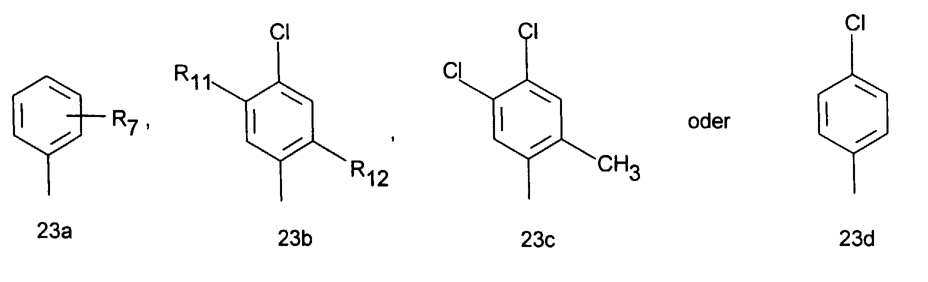
R¹⁰ substituiertes oder unsubstituiertes C₁-C₆-Alkylen,
C₁-C₆-Alkylen-O-C₁-C₆-Alkylen, C₁-C₆-Alkylen-CONH-C₁-C₆-Alkylen, C₁-C₆-Alkylen-COO-C₁-C₆-Alkylen, -NH-C₂-C₄-Alkylen oder -C₂-C₄-Hydroxyalkylen-NH-C₂-C₄-Alkylen, R⁹ unabhängig voneinander Wasserstoff, C₁-C₆-Alkyl, C₂-C₆-Hydroxyalkyl oder jeweils zwei Reste R⁹ zusammen mit dem N-Atom eine Morpholino-, Pyrrolidino-, Piperidino-, N-Alkylpiperazino- oder
N-Hydroxyethylpiperazinogruppe, R¹¹ und R¹² unabhängig voneinander Wasserstoff, Methyl oder Chlor bedeuten, R⁶ und R⁷ die oben angegebenen Bedeutungen haben, n Null oder 1 ist und A ein farbloses Anion bedeutet.

Als bevorzugte Pyrazolin-Aufheller kommen vor allem die Verbindungen der folgenden Formel in Frage 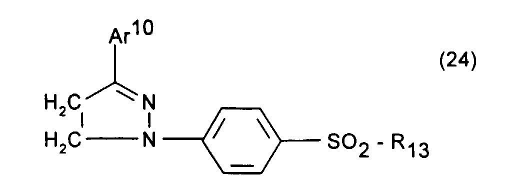 worin Ar¹⁰ eine 4-Chlorphenylgruppe und R¹³ eine Gruppe der folgenden Formeln darstellt: -NH₂, -C₂H₄N(CH₃)₂, -CH₂CHCH₃N(CH₃)₂, -C₂H₄OC₂H₄N(CH₃)₂, -CHCH₃CH₂N(CH₃)₂ oder Ar¹⁰ eine 2-Methyl-4,5-dichlorphenylgruppe und R¹³ eine Gruppe der Formel -C₂H₄N(CH₃)₂, (CH₂)ₓ-OCOR¹⁴ oder (CH₂)ₓ-OR¹⁵, X eine Zahl von 1 bis 4, R¹⁴ C₁-C₆, vorzugsweise C₁-C₃-Alkyl oder C₁-C₃-Hydroxyalkyl, R¹⁵ Wasserstoff oder C₁-C₆-, vorzugsweise C₁-C₃-Alkyl darstellen.

Als C₁-C₆-Alkylreste kommen unverzweigte und verzweigte Alkylreste, wie der Methyl-, Ethyl-, Propyl, Butyl-, Pentyl- und Hexylrest in Betracht. Entsprechendes gilt für die C₁-C₈-Alkoxygruppen und für die C₁-C₆-Alkylengruppen.

Weitere Verbindungen kationischer Natur sind Benzimidazol-benzofuran-Derivate oder Benzimidazol-benzoxazol-Derivate der Formel 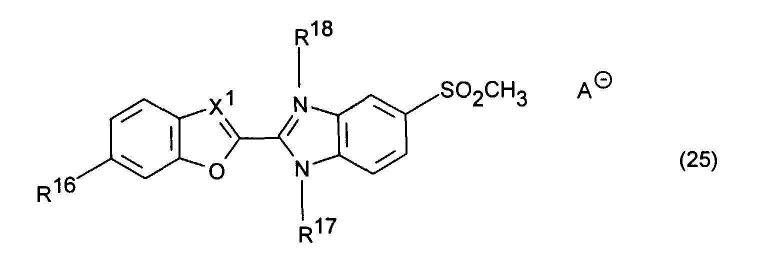 worin X¹ für N oder CH, R¹⁶ für C₁- bis C₄-Alkoxy und R¹⁷ und R¹⁸ unabhängig voneinander für C₁- bis C₄-Alkyl stehen, und A ein farbloses Anion bedeutet.

Weitere Verbindungen kationischer Natur sind aufgebaut auf Cumarinbasis: 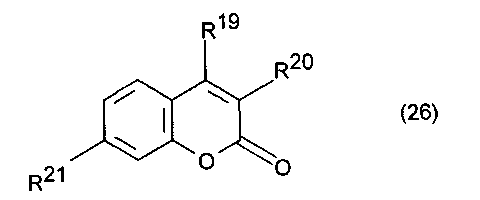 worin R¹⁹ H, Cl oder CH₂COOH, R²⁰ H, Phenyl, COO-(C₁- bis C₄-Alkyl) oder eine Gruppe der Formel 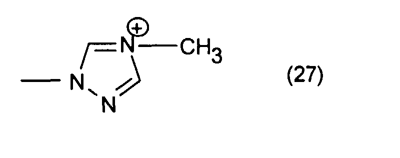 und R²¹ O-C₁-C₄-Alkyl, N-(C₁-C₄-Alkyl)₂, NH-CO-(C₁-C₄-Alkyl) oder eine Gruppe der Formeln 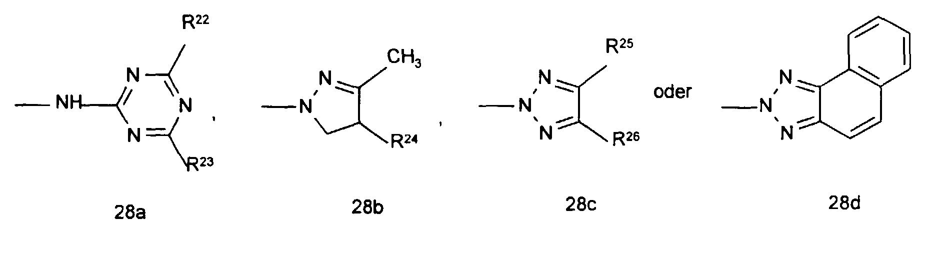 worin R²² und R²³ unabhängig voneinander Phenyl, mono- oder disulfoniertes Phenyl, Phenylamino, Morpholino, -N(CH₂CH₂OH)₂, -N(CH₃)(CH₂CH₂OH), -NH₂, -N(C₁-C₄-Alkyl), -OCH₃, -Cl, NH-CH₂CH₂SO₃H oder -NH-CH₂CH₂OH bedeutet, und R²⁴, R²⁵ und R²⁶ H, C₁-C₄-Alkyl oder Phenyl sind.

Vorzugsweise entsprechen die optischen Aufheller nichtionischer Natur den folgenden Formeln: 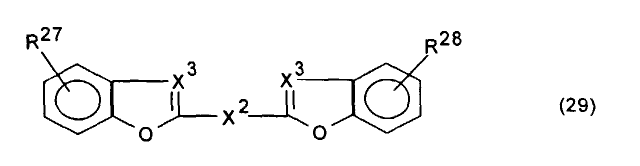 worin R²⁷ und R²⁸ unabhängig voneinander H oder (C₁-C₆)-Alkyl, X³N oder CH und X² eine Bindung über 1,4-Naphthyl-, 2,5-Thiophen-, 2,5-Furan-, 1,4-Phenyl-, Ethylen-, Stilben-, Styryl- oder Imidazolyleinheiten bedeuten, 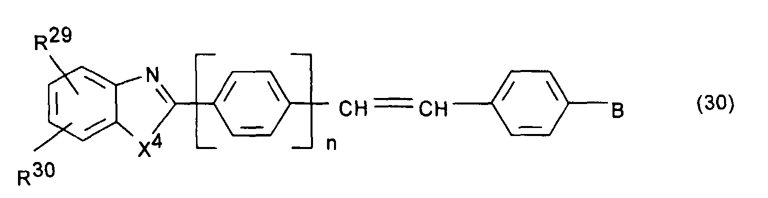 wobei X⁴O oder S, R²⁹ in 5-Stellung ein Wasserstoff- oder Chloratom, eine Methyl- oder Phenylgruppe und R³⁰ ein Wasserstoffatom, oder R²⁹ und R³⁰ beide eine Methylgruppe in 5,6- oder 5,7-Stellung, n 0 oder 1 und B eine Cyano- oder Carbo-(C₁-C₄)-alkoxygruppe oder eine Gruppe der Formeln 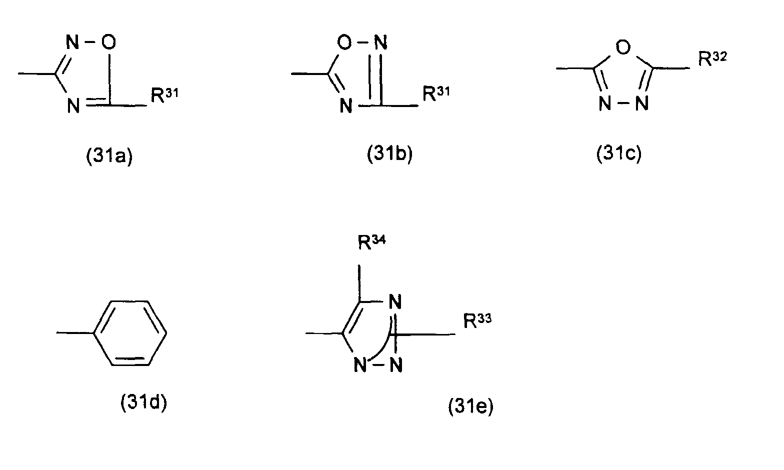 bedeuten, worin R³¹ (C₁-C₆)-Alkyl, (C₁-C₆)-Chloralkyl, (C₁-C₄)-Alkoxy-(C₁-C₄)-alkyl, Hydroxy-(C₁-C₄)-alkyl oder eine Gruppe der Formel -(CH₂CH₂O)ₙ-R³⁵, n 2 oder 3 und R³⁵ Wasserstoff oder (C₁-C₄)-Alkyl, R³² Phenyl, Halogenphenyl, (C₁-C₄)-Alkylphenyl oder (C₁-C₄)-Alkoxyphenyl, R³³ (C₁-C₄)-Alkyl und R³⁴ Cyano oder Carbo-(C₁-C₄)-alkoxy bedeuten. In Formel 31e bedeutet der eingezeichnete Halbkreis, daß eine Doppelbindung vorhanden ist, die zwischen jeweils 2 der Stickstoffatome liegt, und demzufolge der Rest R³³ zur Valenzabsättigung eine entsprechend geeignete Position einnimmt.

Weitere bevorzugte optische Aufheller nichtionischer Natur sind: 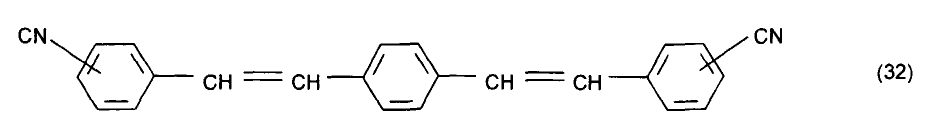 wobei die CN-Gruppen gleich oder unterschiedlich in ortho-, meta- oder para-Stellung sich befinden können, 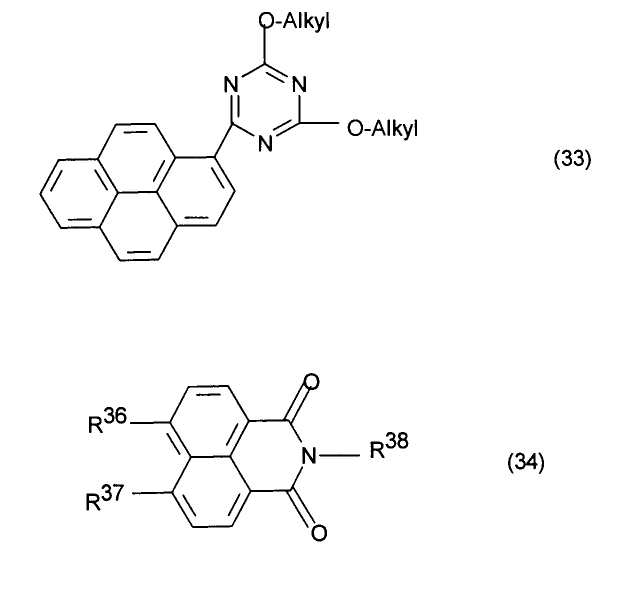 wobei R³⁶ Wasserstoff oder Alkoxy, R³⁷ Alkoxy und R³⁸ Alkyl, Alkoxyalkyl oder Dialkylaminoalkyl bedeuten, 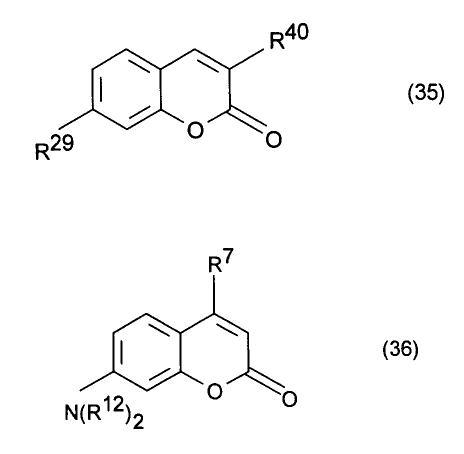 wobei R³⁹ Phenyl oder die Gruppe der Formel 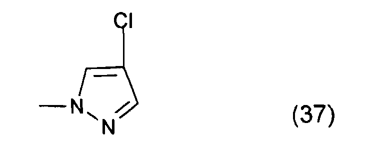 und R⁴⁰ eine Gruppe der Formeln 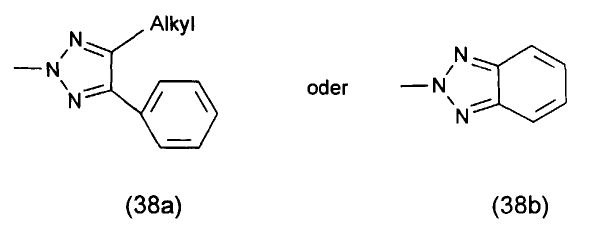 bedeuten, und R¹² die oben angegebene Bedeutung hat,

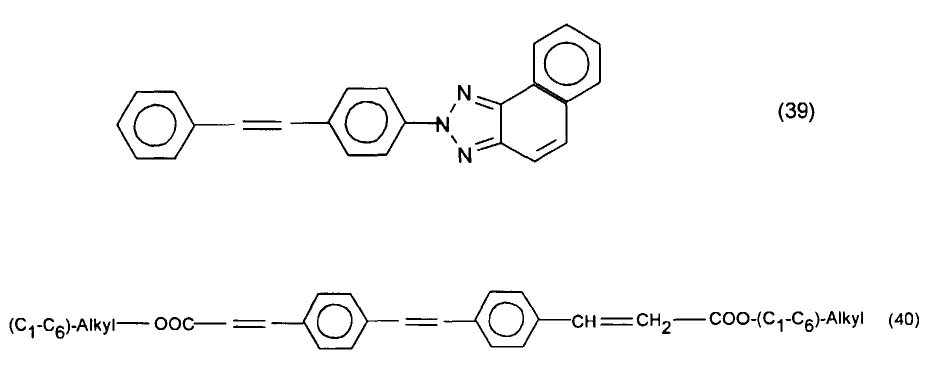

Werden derartige optische Aufheller in kleinen Konzentrationen in Flugzeugenteisungsmitteln eingesetzt, kann durch Bestrahlung mit UV-Licht durch den Fluoreszenzeffekt auch bei Dunkelheit problemlos überprüft werden, ob alle Oberflächenteile eines Flugzeugs mit Vereisungsschutzmittel bedeckt sind. Dies stellt einen Gewinn an Sicherheit vor dem Start des Flugzeugs dar. Die Erfindung soll nun anhand von Beispielen weiter verdeutlicht werden.

### Beispiel 1:

In 1000 g eines verdickten Flugzeugenteisungsmittels, bestehend aus
a) 500 g 1,2-Propylenglykol,
b) 2 g Natriumalkylbenzolsulfonat als Tensid
c) 1 g Benzotriazol als Korrosionsinhibitor
d) 3,3 g vernetzte Polyacrylsäure als Verdickungsmittel
e) 1,2 g Natriumhydroxid zur Einstellung des pH-Werts auf 7,0 bis 7,5
f) 0,05 g grünen wasserlöslichen Farbstoffs
g) Wasser als Restmenge auf 1000 g wurden
h) 0,05 g eines optischen Aufhellers der Formel 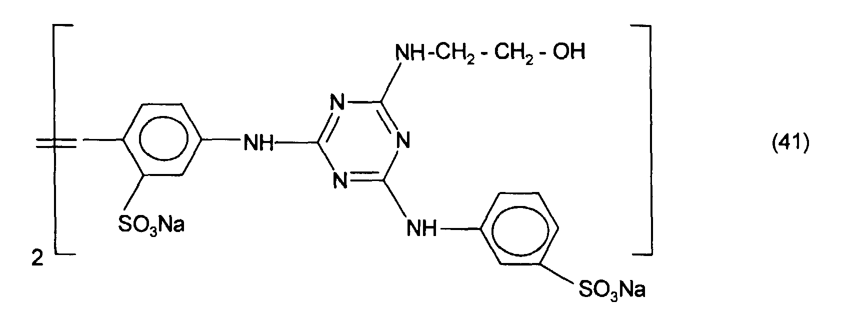
gelöst.

Das Enteisungsmittel wurde auf eine Aluminiumfläche aufgegossen und bei Dunkelheit mit UV-Licht einer Wellenlänge 350 nm beleuchtet. Die vollständige Bedeckung der Aluminiumoberfläche mit Enteisungsmittel und damit der vollständige Schutz gegen Vereisung konnte eindeutig an der blaugrün-weißen Fluoreszenz beobachtet werden. Bei Beleuchtung mit sichtbarem Licht war eine Unterscheidung zwischen mit Enteisungsmittel bedeckter und ungeschützter Aluminiumoberfläche nur unzureichend möglich.

### Vergleichsbeispiel 1:

Das verdickte Enteisungsmittel aus Beispiel 1, bestehend aus den Komponenten a) bis g) wurde ohne Zusatz des optischen Aufhellers h) auf eine Aluminiumfläche aufgegossen. Es war nicht möglich, eindeutig die vollständige Bedeckung der Aluminiumoberfläche bei Beleuchtung mit sichtbarem Licht oder UV-Licht zu beurteilen.

### Beispiel 2:

In 1000 g eines verdickten Flugzeugenteisungsmittels, bestehend aus
a) 600 g Monoethylenglykol,
b) 2 g Fettalkoholethoxylat als Tensid
c) 1 g Tolyltriazol und 1 g Natriumphosphat als Korrosionsinhibitoren
d) 2,5 g Xanthan als Verdickungsmittel
e) Wasser als Restmenge auf 1000 g wurden
f) 0,05 g eines Aufhellers wie bei Beispiel 1 gelöst.

Das Enteisungsmittel wurde auf 70°C erwärmt und auf eine mit 1 mm Eis bedeckte Aluminiumfläche aufgesprüht, bis das Eis geschmolzen war und ein Schutzfilm von Enteisungsmittel auf der Oberfläche zurückblieb. Durch Beleuchtung mit UV-Licht einer Wellenlänge 350 nm konnte die vollständige Bedeckung der Aluminiumoberfläche mit Enteisungsmittel und damit der vollständige Schutz gegen erneute Vereisung eindeutig an der weißen Fluoreszenz beobachtet werden. Bei Beleuchtung mit sichtbarem Licht war eine Unterscheidung zwischen mit Enteisungsmittel bedeckter und vereister Aluminiumoberfläche nur unzureichend möglich.

### Vergleichsbeispiel 2:

Das verdickte Enteisungsmittel aus Beispiel 2, bestehend aus den Komponenten a) bis e) wurde ohne Zusatz des optischen Aufhellers f) auf 70°C erwärmt und auf eine mit 1 mm Eis bedeckte Aluminiumfläche aufgesprüht bis das Eis geschmolzen war und ein Schutzfilm von Enteisungsmittel auf der Oberfläche zurückblieb. Bedingt durch das Fehlen der Komponente f) war es bei Dunkelheit durch Beleuchtung mit UV-Licht nicht möglich zwischen mit Enteisungsmittel bedeckter und vereister Aluminiumoberfläche zu unterscheiden. Bei Beleuchtung mit sichtbarem Licht war eine Unterscheidung zwischen mit Enteisungsmittel bedeckter und vereister Aluminiumoberfläche nur unzureichend möglich.

### Beispiel 3:

Es wurde wie bei Beispiel 1 verfahren. Als optischen Aufheller wurden 0,05 g eines Aufhellers der Formel 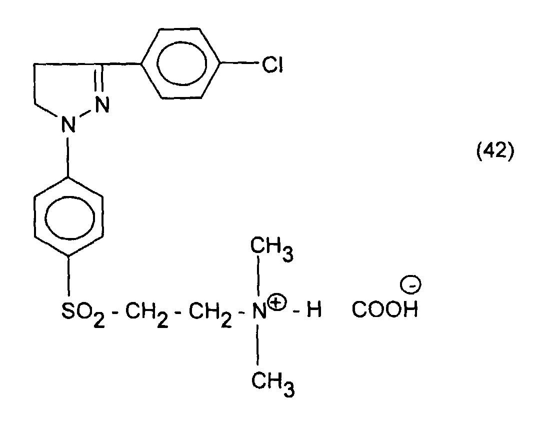 verwendet.

Die vollständige Bedeckung der Al-Oberfläche mit Enteisungsmittel konnte an der bläulichen Fluoreszenz beobachtet werden.

### Beispiel 4:

Es wurde wie bei Beispiel 1 verfahren, jedoch wurden 350 mg des Aufhellers der Formel 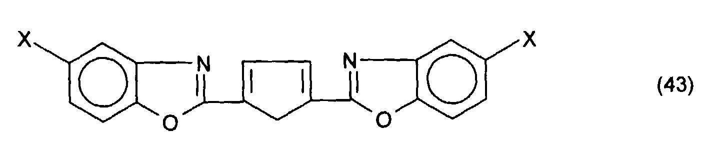 in 500 ml Propylenglykol unter leichtem Erwärmen gelöst. Die vollständige Bedeckung der Al-Oberfläche mit Enteisungsmittel konnte an der bläulichen Fluoreszenz beobachtet werden.

## Patentansprüche

1. Vereisungsschutzmittel für Flugzeuge enthaltend Wasser, ein oder mehrere Glykole, einen oder mehrere Korrosionsinhibitoren, ein oder mehrere Tenside, ein oder mehrere pH-Wert-Regulatoren und ein oder mehrere Farbstoffe, dadurch gekennzeichnet, daß das Mittel zusätzlich einen optischen Aufheller enthält, der ultraviolettes Licht absorbiert und eine Fluoreszenz im sichtbaren Spektralbereich aufweist.

2. Vereisungsschutzmittel nach Anspruch 1, gekennzeichnet durch einen Gehalt an Verdickungsmittel von 0,05 bis 3 Gew.-%, bezogen auf das Vereisungsschutzmittel.

3. Vereisungsschutzmittel nach Anspruch 1 und/oder 2, dadurch gekennzeichnet, daß der optische Aufheller ein anionischer, kationischer oder nichtionischer optischer Aufheller oder eine Mischung aus solchen Aufhellern ist.

4. Vereisungsschutzmittel nach einem oder mehreren der Ansprüche 1 bis 3, dadurch gekennzeichnet, daß es optische Aufheller in Mengen von 0,001 bis 0,5 Gew.-%, bezogen auf das Vereisungsschutzmittel enthält.

5. Verwendung von optischen Aufhellern in Vereisungsschutzmitteln für Flugzeuge zur Verbesserung des Nachweises der Anwendung der Vereisungsschutzmittel unter schlechten Sichtbedingungen und bei Nacht auf der Oberfläche von Flugzeugen.

6. Verfahren zum Enteisen von Flugzeugen durch Aufbringen eines Vereisungsschutzmittels, dadurch gekennzeichnet, daß das Vereisungsschutzmittel einen optischen Aufheller enthält, und daß die vollständige Benetzung des Flugzeuges durch Bestrahlen mit ultraviolettem Licht und Beobachtung der Fluoreszenz festgestellt wird.
